Europäisches Patentamt

European Patent Office

Office européen des brevets

(11) Veröffentlichungsnummer: **0 106 804**
A2

## (12) EUROPÄISCHE PATENTANMELDUNG

(21) Anmeldenummer: 83810456.0

(22) Anmeldetag: 06.10.83

(51) Int. Cl.³: **F 27 B 13/12**
**C 04 B 35/52**

(30) Priorität: 18.10.82 CH 6048/82

(43) Veröffentlichungstag der Anmeldung:
25.04.84 Patentblatt 84/17

(84) Benannte Vertragsstaaten:
BE CH DE FR GB IT LI LU NL

(71) Anmelder: SCHWEIZERISCHE ALUMINIUM AG

CH-3965 Chippis(CH)

(72) Erfinder: Moser, Robert
Galdistrasse
CH-3945 Steg(CH)

(54) **Gasbeheizter offener Ringkammerofen.**

(57) Ein gasbeheizter offener Ringkammerofen zur Herstellung von kohlenstoffhaltigen Formkörpern ist mit rohrförmigen Impulsbrennern mit mindestens einer Düsenöffnung ausgerüstet. Der Ofen wird mit einer Pulsfrequenz von 120 - 150 geregelt.

Durch Vermeiden von Temperaturspitzen kann der Ofen energiegünstig betrieben und das Mauerwerk der Feuerschächte weitgehend geschont werden. Es ergibt sich ferner eine gleichmässigere Temperaturverteilung innerhalb einer Kassettenlänge der Feuerschächte.

EP 0 106 804 A2

Gasbeheizter offener Ringkammerofen

Die vorliegende Erfindung betrifft einen gasbeheizten offenen Ringkammerofen zur Herstellung von kohlenstoffhaltigen Formkörpern, vornehmlich von Elektroden für die Aluminiumschmelzflusselektrolyse nach Hall-Héroult, sowie ein Verfahren zum Betrieb desselben.

Die kohlenstoffhaltigen Körper werden im allgemeinen aus einer mit einem Bindemittel wie beispielsweise Teer und/oder Pech versehenen Masse von Petrolkoks, Glanzkohle, Russ, Graphit oder dgl. hergestellt. Beim Brennen derartiger Formkörper wird das Bindemittel verkokt, wodurch die gewünschten mechanischen und elektrischen Eigenschaften erzielt werden.

Auf diese Weise werden in offenen Ringkammeröfen Anoden für die Aluminiumschmelzflusselektrolyse hergestellt.

Der offene Ringkammerofen besteht aus einer Anzahl stationärer, aneinandergereihter Brennkammern. Die Brennkammern sind durch quer zur Aneinanderreihung liegende Gurtwände voneinander abgegrenzt und durch längs zur Aneinanderreihung verlaufende Feuerschächte in Kassetten unterteilt.

Durch Parallelanordnung von zwei Brennkammerreihen und Ueberbrücken ihrer beiden Feuerschachtsysteme wird für die Feuerschächte ein Ringzustand hergestellt.

-2-

Das Brennen der Anoden geschieht indirekt durch Beheizen der Feuerschächte mit mobilen Brennern. Bei einem Brennvorgang werden mehrere Brennkammern zu einem Brandzug zusammengefasst, die über einen Rauchgas-Absauger an die Rauchgasringleitung - diese umschliesst üblicherweise den gesamten Ofen - angeschlossen sind. Die Anzahl der zu einem Brandzug zusammengefassten Kammern richtet sich sowohl nach der Geometrie der Kassetten und Feuerschächte als auch nach der Brandführung. Die Anzahl der Brandzüge dagegen ist von der Ofengrösse, d.h. von der Anzahl Kammern abhängig.

Durch den Anschluss des Absaugers an die Rauchgasringleitung entsteht in den Feuerschächten des Brandzuges ein Unterdruck. Dadurch wird die zur Verbrennung des Brennstoffs erforderliche Luft durch die noch mit bereits gebrannten Anoden gefüllten 1 bis 2 Kammern hinter der Heizzone liegenden geöffneten Gurtwandöffnungen in die Feuerschächte gesogen und dabei vorgewärmt. Ferner gelangt eine erhebliche Luftmenge als Falschluft durch das poröse Mauerwerk und die geschlossenen Brennerlöcher und Gurtwandöffnungen in die Feuerschächte. Die kalzinierten Anoden werden jeweils am Ende der Kühlzone eines Brandzuges aus der Brennkammer genommen, worauf anschliessend die leere Brennkammer wieder mit neuem ungebranntem Brenngut beschickt wird.

Durch Umsetzen in vorbestimmten, regelmässigen Zeitintervallen von Absauger, Brennern und Kühlventilatoren zu einer benachbarten Kammer wandern die Brandzüge zyklisch (quasi kontinuierlich) um den Ofen.

Die Brenner zum Beheizen der offenen Ringkammeröfen sind rohrförmig ausgebildet und enthalten an der dem Feuerschacht zugekehrten Seite eine Düse. Sie werden -- ausser selbstverständlicherweise beim Umsetzen -- kontinuierlich betrieben. Dabei ragt die Flamme nur zu einem geringen Teil in den Feuerschacht hinein. Dieser Umstand bedingt, dass innerhalb einer Kassettenlänge der Feuerschacht nicht homogen erwärmt wird. Sowohl in Decken- als auch in Bodennähe ist die Temperatur niedriger als im zentralen Bereich. Die Temperaturdifferenzen können 100-200°C betragen. Die Temperaturdifferenzen treten insbesondere in den Ecken von Boden- und Gurtwänden auf.

Es hat nicht an Versuchen gefehlt, die Temperaturdifferenzen durch besondere Einbauten in den Feuerschächten zu verhindern. Vorgeschlagen wurde beispielsweise das Auffüllen der Ecken mit Feuerfestmaterial, wodurch eine günstigere aerodynamische Strömung des Heizgases und damit ein besserer Wärmeübergang bewirkt werden sollte. Unabhängig von dem Nachteil, dass derartige Einbauten nur bei Erneuerung eines Feuerschachtes in Frage kommen, haben die Einbauten nicht den erhofften Erfolg erzielt.

Angesichts dieser Gegebenheiten hat sich der Erfinder das Ziel gesetzt, einen gasbeheizten offenen Ringkammerofen zur Herstellung von kohlestoffhaltigen Formkörpern, vornehmlich von Elektroden für die Aluminiumschmelzflusselektrolyse nach Hall-Héroult, derartig zu betreiben, dass die eingangs erwähnten Nachteile vermieden werden.

Zur Lösung der Aufgabe führt, dass der Ofen mit rohrförmigen Impulsbrennern mit mindestens einer Düsenöffnung ausgerüstet ist.

Nach einem weiteren Merkmal der Erfindung soll die Düsenöffnung mindestens 1 mm betragen. Der Impulsbrenner kann mit Düsen versehen sein, die radial angeordnet sind, oder nur eine axial angeordnete Düse aufweisen. Bei axial angeordneter Düse kann die Länge des Brenners so ausgebildet werden, dass die Düsenöffnung etwa bündig mit der Abdeckung des Feuerschachts ist. Zweckmässig ist es jedoch, wie bei einem Impulsbrenner mit radial angeordneten Düsenöffnungen zu verfahren, bei dem der Brenner in den Feuerschachtsbereich hineinragt. Nach einem zusätzlichen Merkmal ist es günstig, wenn bei axialer Anordnung der Düse ihre Oeffnung mindestens 5 mm beträgt.

Die Länge des Brenners ist von der jeweiligen Ofentiefe abhängig. Es hat sich jedoch erwiesen, dass der Abstand des Brenners vom Boden mit Vorteil mindestens 80 cm betragen sollte. Besonders günstig ist es, wenn der Brenner etwa 30 - 60 cm in den Feuerschacht hineinragt.

Die Länge der Flamme und damit der direkt erwärmbare Bereich des Feuerschachts ist bei vorgegebenem Gasdruck und Impulsbrennertyp durch die Impulsfrequenz regulierbar: Soll die Flamme kurz gehalten werden, weil z.B. besonders der Deckenbereich des Feuerschachts erwärmt werden muss, sind hohe Impulsfrequenzen erforderlich, d.h. die Gaseinspeisungszeiten sind kurz, die dazwischen liegenden Totzeiten ebenfalls. Umgekehrtes gilt, wenn die Ofenführung eine lange Flamme erfordert, insbesondere beim Erwärmen der Ecken an Boden und Gurtwand.

Es hat sich als besonders günstig erwiesen, den erfindungsgemässen gasbeheizten offenen Ringkammerofen durch Einspeisung des Gases mit einer Pulsfrequenz (Impulse/Minute) von 20-150 zu regeln. Der Frequenzbereich wird im wesentlichen durch den Gasdruck und die Flammenform bestimmt. Diese ist wiederum abhängig vom Luftüberschuss im Feuerschachtsystem. Eine höhere Impulsfrequenz als 150 hat sich als unzweckmässig erwiesen, da diese dem Dauerbrenner mit seinen vorher genannten Nachteilen schon recht nahe kommt. Als besonders günstig hat sich erwiesen, zur Regelung eine Pulsfrequenz von 20-100 zu verwenden. In diesem Bereich zeigten sich ideale Brennbedingungen; das Gas konnte ohne Luftüberschuss vollständig verbrannt werden, d.h. eine Sekundärluftzuführung war nicht notwendig. Die Verbrennung des Gases erfolgte in situ.

Durch die erfindungsgemässe Vorrichtung und das erfindungsgemässe Verfahren ist es möglich, die Feuerschachtwände einer Brennkammer derartig homogen aufzuheizen, dass Temperaturdifferenzen praktisch vollständig vermieden werden, was eine bessere Anodenqualität liefert. Die Qualität der Anoden ist praktisch unabhängig von ihrer Lage in der Kammer.

Durch Vermeiden von Temperaturspitzen kann der Ofen gegenüber einem gemäss dem Stand der Technik energiegünstiger betrieben werden. Ein weiterer Vorteil ist, dass das Mauerwerk des Feuerschachts weitgehend geschont wird.

Patentansprüche

1. Gasbeheizter offener Ringkammerofen zur ·Herstellung von kohlenstoffhaltigen Formkörpern, vornehmlich von Elektroden für die Aluminiumschmelzflusselektrolyse nach Hall-Héroult, dadurch gekennzeichnet, dass der Ofen mit rohrförmigen Impulsbrennern mit mindestens einer Düsenöffnung ausge- rüstet ist.

2. Gasbeheizter offener Ringkammerofen nach Anspruch 1, dadurch gekennzeichnet, dass die Düsenöffnung axial angeordnet ist.

3. Gasbeheizter offener Ringkammerofen nach Anspruch 1, dadurch gekennzeichnet, dass die Düsenöffnungen radial angeordnet sind.

4. Gasbeheizter offener Ringkammerofen nach Anspruch 2, dadurch gekennzeichnet, dass die Düsenöffnung mindestens 5 mm beträgt.

5. Gasbeheizter offener Ringkammerofen nach Anspruch 3, dadurch gekennzeichnet, dass die Düsenöffnung mindestens 1 mm beträgt.

6. Gasbeheizter offener Ringkammerofen nach einem der Ansprüche 1 bis 4, dadurch gekennzeichnet, dass der Abstand des Brenners vom Ofenboden mindestens 80 cm beträgt.

7. Gasbeheizter offener Ringkammerofen nach einem der Ansprüche 1 - 4, dadurch gekennzeichnet, dass der Brenner etwa 30 - 60 cm in den Feuerschacht ragt.

8. Verfahren zum Betreiben eines gasbeheizten offenen Ringkammerofens zur Herstellung von kohlenstoffhaltigen Formkörpern, vornehmlich von Elektroden für die Aluminiumschmelzflusselektrolyse nach Hall-Héroult, unter Verwendung der Vorrichtung gemäss mindestens einem der Ansprüche 1 bis 6, dadurch gekennzeichnet, dass der Ofen durch Einspeisung des Gases mir einer Pulsfrequenz (Impulse/Minute) von 20-150, insbesondere 20 - 100, geregelt wird.

9. Verfahren zum Betreiben eines gasbeheizten offenen Ringkammerofens nach Anspruch 8, dadurch gekennzeichnet, dass gleichzeitig mehrere Brenner geregelt werden.

10. Verfahren zum Betreiben eines gabeheizten offenen Ringkammerofens nach Anspruch 8 oder 9, dadurch gekennzeichnet, dass die vollständige Verbrennung des eingespeisten Gases in situ erfolgt.